Europäisches Patentamt

European Patent Office

Office européen des brevets

(19)

(11) Numéro de publication : **0 446 159 A1**

(12) # DEMANDE DE BREVET EUROPEEN

(21) Numéro de dépôt : **91450002.0**

(22) Date de dépôt : **21.02.91**

(51) Int. Cl.⁵ : **H04N 1/34, G07F 17/26**

(30) Priorité : **21.02.90 FR 9002319**

(43) Date de publication de la demande :
**11.09.91 Bulletin 91/37**

(84) Etats contractants désignés :
**BE CH ES LI LU**

(71) Demandeur : **SOCIETE ANONYME DITE TECHNACOM S.A.**
**6 cours de Tournon**
**F-33000 Bordeaux (FR)**

(72) Inventeur : **Astorga, Marc**
**52 avenue de Tivoli**
**F-33110 Le Bouscat (FR)**

(74) Mandataire : **Thébault, Jean-Louis**
**CABINET THEBAULT S.A., 1 allées de Chartres**
**F-33000 Bordeaux (FR)**

(54) **Dispositif de commande à paiement d'un télécopieur.**

(57) — L'objet de l'invention est un dispositif de commande à paiement d'un télécopieur caractérisé en ce qu'il est constitué d'un moyen (1,2) propre à générer un signal en réponse à l'établissement de la connexion téléphonique du télécopieur avec le télécopieur appelé ou appelant, d'un circuit de temporisation et d'interconnexion (3) interposé entre ledit moyen (1,2) et un circuit (4,5,8) d'interruption momentanée de l'alimentation en énergie électrique du télécopieur et susceptible d'activer ce circuit (3) au terme de ladite temporisation, et d'un dispositif de paiement (9,10) relié au circuit de temporisation et interconnexion (3) et susceptible d'inhiber ce dernier en réponse à la détection dans le dispositif de paiement de l'acquittement d'une somme prédéterminée.
— Application aux télécopieurs.

EP 0 446 159 A1

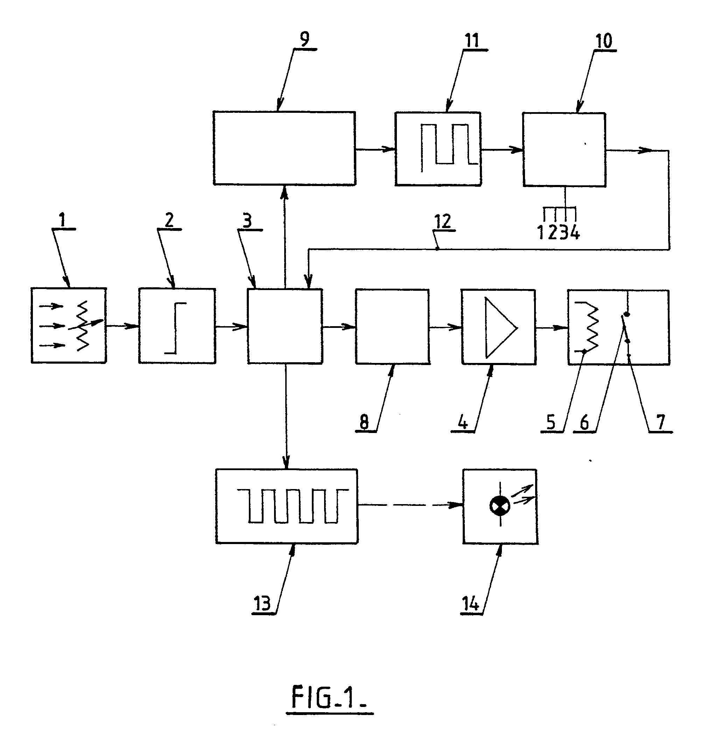

$$\underline{\text{FIG.1.}}$$

## DISPOSITIF DE COMMANDE A PAIEMENT D'UN TELECOPIEUR

La présente invention a trait à un dispositif de commande à paiement d'un télécopieur et plus précisément à un dispositif d'autorisation, sous réserve du paiement d'une somme prédéterminée, de l'usage d'un télécopieur.

Le but de l'invention est de proposer un moyen simple, pratique, ne nécessitant aucune intervention sur les circuits internes d'un télécopieur, permettant l'utilisation en self-service de l'appareil, aussi bien à l'envoi d'un document qu'à la réception, sous la condition d'effectuer le paiement d'une somme appropriée.

A cet effet, l'invention a pour objet un dispositif de commande à paiement d'un télécopieur, caractérisé en ce qu'il est constitué :

- d'un moyen propre à générer un signal en réponse à l'établissement de la connexion téléphonique du télécopieur avec le télécopieur appelé ou appelant ;
- d'un circuit de temporisation et d'interconnexion interposé entre ledit moyen et un circuit d'interruption momentanée de l'alimentation en énergie électrique du télécopieur et susceptible d'activer ce circuit au terme de ladite temporisation, et
- d'un dispositif de paiement relié au circuit de temporisation et interconnexion et susceptible d'inhiber ce dernier en réponse à la détection dans le dispositif de paiement de l'acquittement d'une somme prédéterminée.

Afin de permettre l'envoi ou la réception de plusieurs documents à la suite, le dispositif est avantageusement muni d'un moyen de détection de la fin d'émission ou de réception de chaque document, susceptible de générer un signal re-initialisant ledit circuit de temporisation et interconnexion.

Suivant un mode de réalisation particulièrement simple et fiable, le moyen propre à générer un signal en réponse à l'établissement de ladite connexion téléphonique est un circuit détectant l'apparition du signal lumineux d'établissement de connexion et de début et de fin d'émission/réception du document dont sont équipés les télécopieurs conventionnels, ce circuit constituant en même temps ledit moyen de re-initialisation du circuit de temporisation et interconnexion.

Un tel dispositif ne nécessite aucun agrément des autorités gérant les communications téléphoniques, car il n'intervient aucunement sur les circuits internes du télécopieur et permet un usage en self-service très facile pour l'envoi ou la réception aussi bien d'un seul document que de plusieurs à la suite, sans interruption de la liaison téléphonique.

Le dispositif de paiement est par exemple un monnayeur à pièces du commerce, apte à délivrer un signal lorsqu'il est garni de la ou les pièces nécessaires correspondant à la somme pré-fixée autorisant l'envoi ou la réception d'un document.

D'autres caracéristiques et avantages ressortiront de la description qui va suivre d'un mode de réalisation du dispositif de l'invention, description donnée à titre d'exemple uniquement et en regard des dessins annexés sur lesquels :

- Figure 1 illustre schématiquement un dispositif conforme à l'invention utilisant un monnayeur et opérant à partir de la détection du signal lumineux d'établissement de connexion téléphonique du télécopieur, et
- Figure 2 est un organigramme illustrant le fonctionnement du dispositif.

Sur la figure 1 on a représenté en 1 une cellule photoélectrique qui est agencée en regard ou à proximité immédiate du voyant lumineux dont sont équipés tous les télécopieurs actuels et qui est chargé de signaler l'établissement de la connexion téléphonique entre le télécopieur et le télécopieur appelé ou appelant, en même temps que le début de l'émission ou la réception du document, ainsi que la fin de ladite émission/réception.

La cellule photoélectrique 1 est reliée à un détecteur à seuil 2, dont la sortie est connectée à un circuit de temporisation et d'interconnexion 3.

Le circuit 3 est chargé de transmettre, au bout d'un temps prédéterminé, réglable, par exemple entre 10 et 40 secondes, le signal émis par le détecteur 2 à un amplificateur 4 d'alimentation d'un relais 5 de commande d'ouverture d'un interrupteur 6 inséré dans la ligne d'alimentation électrique 7 du délécopieur (non représenté). La liaison entre le circuit 3 et l'amplificateur 4 s'effectue par l'intermédiaire d'un circuit de temporistion 8 n'alimentant l'amplificateur 4 que pendant une durée réduite, limitée à 5 secondes par exemple, lorsque le circuit 3 envoie un signal au circuit 8.

En 9 est représenté symboliquement un monnayeur à pièces du commerce capable de discriminer et compter les pièces introduites. Dans le mode de réalisation schématisé sur la figure 1, le paiement à effectuer pour chaque page transmise ou reçue est fixé à 20 francs, soit deux pièces de 10 francs. C'est pourquoi le monnayeur 9 est muni d'un compteur 10 de pièces, incrémenté (repère 11) par le monnayeur 9.

Le monnayeur 9 est relié électriquement au circuit 3 ainsi que le compteur 10 par une liaison 12 dite d'inhibition de la temporisation du circuit 3.

Enfin, le circuit 3 est également relié à un oscillateur 13, par exemple de fréquence 1 Hz, alimentant un voyant lumineux 14.

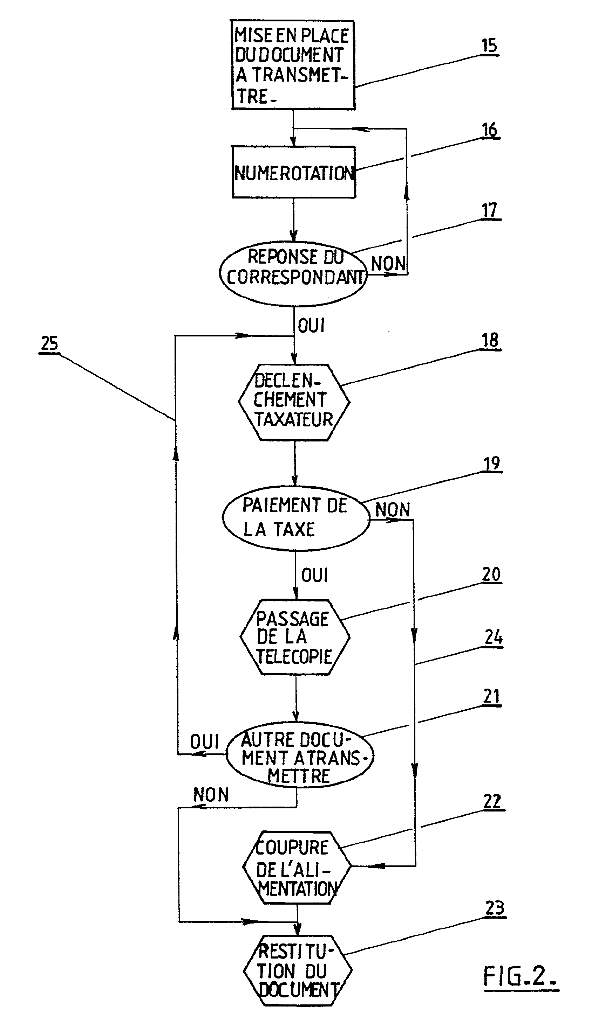

La figure 2 est un organigramme illustrant le fonctionnement du dispositif de la figure 1.

L'étape 15 illustre la mise en place d'un document à transmettre sur le télécopieur, en 16 est opérée par l'utilisateur de l'appareil la numérotation d'appel du télécopieur avec lequel il veut correspondre.

A l'étape 17, si le correspondant ne répond pas, une renumérotation devra être effectuée. En cas de réponse positive, la connexion téléphonique est établie et le circuit de la figure 1 est activé (étape 18).

Si le monnayeur (9,10) est convenablement chargé en pièces, par exemple deux pièces de 10 Francs (étape 19), le passage complet (étape 20) de la page (ou du document) à télécopier est opéré, puis, en l'absence d'autres documents à passer (étape 21), l'utilisateur récupère son document (étape 23).

Si le monnayeur n'est pas convenablement alimenté en argent, le processus (liaison 24) de coupure momentanée de l'alimentation électrique du télécopieur (étape 22) est entamé empêchant la transmission complète du document.

Il est à noter que la durée de coupure de l'alimentation électrique du télécopieur est suffisante pour entraîner la rupture de la liaison téléphonique.

Si un second document est à passer dans la foulée (étape 21) le circuit de la figure 1 est à nouveau activé (liaison 25) .

En se reportant maintenant à la figure 1, lorsque la cellule photoélectrique 1 décèle l'allumage du voyant du télécopieur indiquant l'établissement de la liaison téléphonique, le détecteur 2 engendre un signal qui est envoyé sur le circuit 3 de temporisation et interconnexion.

Plus précisément, ce signal et aussitôt envoyé, d'une part, au monnayeur 9 et, d'autre part, à l'oscillateur 13 qui fait clignoter le voyant 14 invitant l'utilisateur à mettre des pièces dans le monnayeur.

Dès que les nombre et valeur corrects de pièces sont introduites dans le monnayeur 9, le compteur 10 est convenablement incrémenté et délivre en 12 un signal chargé à la fois d'arrêter l'oscillateur 13 et d'inhiber ou suspendre la temporisation dans le circuit 3, lequel ne pourra aller au bout de sa temporisation (réglable) et ne pourra donc pas commander, à travers les circuits 8 et 4, l'excitation momentanée du relais 5 mettant hors alimentation durant 5 secondes le télécopieur.

Le document peut donc passer totalement.

Le détecteur 2 est conçu de façon à ne pas prendre en compte le changement d'état lumineux du voyant du télécopieur en fin de passage. Seuls les changements d'état lumineux au moment de l'établissement de la liaison téléphonique et au début du passage de chaque document, sont pris en compte.

Si chaque cycle de fonctionnement du voyant débute par un signal lumineux intermittent, le détecteur 2 sera agencé pour ne prendre en compte que le premier front descendant du signal intermittent. Si chaque cycle commence par un signal fixe, le détecteur 2 sera agencé pour ne prendre en compte que le premier front montant et sera constitué par exemple par une porte logique NON-ET.

Ainsi, si le document qui vient de passer n'est pas suivi d'un second, le détecteur 2 reste indifférent à l'extinction dudit voyant du télécopieur.

Par contre, si un second document est mis en place, un nouveau cycle d'allumage dudit voyant va solliciter à nouveau le détecteur 2 pour une nouvelle vérification de l'alimentation correcte du monnayeur 9, à l'intérieur du délai fixé par la temporisation du circuit 3, faute de quoi l'émission du second document sera interrompue par l'intervention momentanée du relais 5.

Le compteur 10 n'est pas nécessaire si une seule pièce suffit pour constituer le prix du passage d'un document.

Le dispositif de l'invention fonctionne aussi bien pour l'envoi d'un document que pour la réception, dans la mesure où le destinataire est présent au moment de la réception pour alimenter le monnayeur avant que le télécopieur n'interrompe sa réception.

Le monnayeur 9 peut être remplacé par tout dispositif acceptant d'autres moyens de paiement tels que billets, jetons, monnaie électronique, cartes à puces, etc..., et capable de détecter l'acquittement d'une somme préfixée et d'engendrer en réponse un signal analogue au signal 12 du dispositif de la figure 1, c'est-à-dire susceptible d'inhiber le déclenchement à terme du circuit (8,4,5) d'interruption momentanée de l'alimentation électrique du télécopieur.

Le dispositif de l'invention n'intervient aucunement sur les circuits internes du télécopieur, en particulier les circuits téléphoniques, et agit seulement en amont de l'appareil, sur l'alimentation générale en énergie électrique et, ce, sans intervention directe sur la liaison téléphonique.

Enfin, l'invention n'est évidemment pas limitée aux modes de réalisation représentés et décrits ci-dessus mais en couvre au contraire toutes les variantes. C'est ainsi que la détection de l'établissement de la liaison téléphonique pourrait s'établir par d'autres moyens, y compris directement et non plus indirectement via ledit voyant lumineux du télécopieur, sans sortir pour autant du cadre de l'invention. Il en va de meême de la détection du début de passage des documents succédant au premier, laquelle pourrait s'opérer par tout autre moyen, mécanique, électrique, etc...

## Revendications

1. Dispositif de commande à paiement d'un télécopieur, caractérisé en ce qu'il est constitué :
   – d'un moyen (1,2) propre à générer un signal en réponse à l'établissement de la connexion téléphonique du télécopieur avec le télécopieur appelé ou appelant ;
   – d'un circuit de temporisation et d'interconnexion (3) interposé entre ledit moyen (1,2) et un circuit (4,5,8) d'interruption momentanée de l'alimentation en énergie électrique du télécopieur et susceptible d'activer ce circuit (3) au terme de ladite temporisation, et

– d'un dispositif de paiement (9,10) relié au circuit de temporisation et interconnexion (3) et susceptible d'inhiber ce dernier en réponse à la détection dans le dispositif de paiement de l'acquittement d'une somme prédéterminée.

2. Dispositif suivant la revendication 1, caractérisé en ce qu'il comporte, en outre, un moyen de détection (1,2) de la fin d'émission ou de réception de chaque document, susceptible de générer un signal re-initialisant ledit circuit de temporisation et interconnexion (3).

3. Dispositif suivant les revendications 1 et 2, caractérisé en ce que le moyen propre à générer un signal en réponse à l'établissement de ladite connexion téléphonique est un circuit (1,2) détectant l'apparition du signal lumineux d'établissement de connexion et de début et de fin d'émission/réception du document dont sont équipés les télécopieurs conventionnels, ce circuit constituant en même temps ledit moyen de re-initialisation du circuit de temporisation et interconnexion (3).

4. Dispositif suivant la revendication 3, caractérisé en ce que ledit moyen de détection d'établissement de connexion téléphonique et de passage de chaque document est constitué par une cellule photoélectrique (1) agencée en regard ou à proximité immédiate du voyant lumineux du télécopieur et reliée à un détecteur de seuil (2) conencté audit circuit de temporisation et interconnexion (3).

5. Dispositif suivant l'une des revendications 1 à 4, caractérisé en ce que ledit circuit d'interruption momentanée de l'alimentation électrique du télécopieur est constitué d'un relais (5) commandant l'ouverture d'un interrupteur (6) inséré dans le circuit (7) d'alimentation du télécopieur, relié audit circuit de temporisation et interconnexion (3) par l'intermédiaire d'un amplificateur (4) et d'un circuit de temporisation (8) susceptible de ne mettre sous tension ledit amplificateur (4) que pendant un laps de temps réduit, réglable.

6. Dispositif suivant l'une des revendications 1 à 5, caractérisé en ce que le dispositif de paiement est constitué par un monnayeur à pièces (9).

7. Dispositif suivant la revendication 6, caractérisé en ce que ledit monnayeur (9) est muni d'un compteur de pièces (10) ssuceptible de délivrer un signal (12) d'inhibition dudit circuit de temporisation et interconnexion (3).

8. Dispositif suivant l'une des revendications 1 à 7, caractérisé en ce qu'il comporte en outre un voyant lumineux (14) de signalisation de paiement, commandé par un oscillateur (13) relié audit circuit de temporisation et interconnexion (3) et mis hors service par le signal d'inhibition généré par ledit dispositif de paiement (9,10).

FIG.1.

```
            ┌──────────────┐
            │ MISE EN PLACE│      ___15
            │ DU DOCUMENT  │
            │ A TRANSMET-  │
            │ TRE.         │
            └──────┬───────┘
                   │          ┌──────────┐
            ┌──────▼───────┐  │      ___16
            │ NUMEROTATION │──┘
            └──────┬───────┘
                   │              ___17
              ╱────▼────╲
             │ REPONSE DU │  NON
             │CORRESPONDANT│────►
              ╲────┬────╱
                   │ OUI
     ___25         │
                ╱──▼──╲
               │DECLEN- │     ___18
               │CHEMENT │
               │TAXATEUR│
                ╲──┬──╱
                   │              ___19
              ╱────▼────╲
             │ PAIEMENT DE│  NON
             │  LA TAXE   │────►
              ╲────┬────╱
                   │ OUI
                ╱──▼──╲
               │PASSAGE │     ___20
               │DE LA   │
               │TELECOPIE│    ___24
                ╲──┬──╱
                   │              ___21
         OUI  ╱────▼────╲
        ◄────│AUTRE DOCU- │
             │MENT A TRANS-│
             │METTRE       │
              ╲────┬────╱
                   │ NON
                ╱──▼──╲        ___22
               │COUPURE │
               │DE L'ALI-│
               │MENTATION│
                ╲──┬──╱
                   │              ___23
                ╱──▼──╲
               │RESTITU-│
               │TION DU │
               │DOCUMENT│
                ╲─────╱
```

FIG.2.

Office européen
des brevets

**RAPPORT DE RECHERCHE EUROPEENNE**

Numero de la demande

EP 91 45 0002

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN, vol. 6, no. 77 (E-106)[955], 14 mai 1982; & JP-A-57 015 567 (NIPPON DENSHIN DENWA KOSHA) 26-01-1982 * En entier * --- | 1 | H 04 N 1/34 G 07 F 17/26 |
| A | WO-A-8 910 035 (TETREL LTD) * Page 14, ligne 6 - page 15, ligne 9 * --- | 1 | |
| A | WO-A-8 503 789 (HENNINGSSON) * Abrégé * --- | 1 | |
| A | US-A-4 133 420 (McMANUS) * Colonne 1, ligne 43 - colonne 2, ligne 2 * ----- | 1 | |

DOMAINES TECHNIQUES
RECHERCHES (Int. Cl.5)

H 04 N
G 07 F
H 04 M

Le présent rapport a été établi pour toutes les revendications

| Lieu de la recherche | Date d'achèvement de la recherche | Examinateur |
|---|---|---|
| LA HAYE | 29-05-1991 | HAZEL J.F. |

EPO FORM 1503 03.82 (P0402)